# EUROPEAN PATENT APPLICATION

(11) **EP 2 874 352 A2**
(43) Date of publication of application: **20.05.2015**
(21) Application number: 13807149.3
(22) Date of filing: 16.08.2013
(51) Int. Cl.: H04L 12/24

(54) **CHANNEL ESTABLISHING METHOD AND APPARATUS**

(30) Priority: 19.03.2013 CN 201310088544
(71) Applicant: ZTE Corporation, Guangdong Province 518057 (CN)
(72) Inventor: ZHANG, Weiliang, Shenzhen Guangdong 518057 (CN); GENG, Dan, Shenzhen Guangdong 518057 (CN); CHEN, Wu, Shenzhen Guangdong 518057 (CN); XU, Aijun, Shenzhen Guangdong 518057 (CN)
(74) Representative: Zerbi, Guido Maria
(86) International application number: PCT/CN2013/081665
(87) International publication number: WO 2013/189350

(57) **Abstract**

A method and apparatus for establishing a channel are disclosed. The method includes: a home network transmitting a channel establishment request to a neighbor home network; and after receiving a confirmation response from the neighbor home network, the home network establishing a mutual-aid communication channel with the neighbor home network. The apparatus includes a channel request module and a channel establishment module.

## Description

### Technical Field

The present invention relates to the field of communications, and in particular, to a method and apparatus for establishing a channel.

### Background of the Related Art

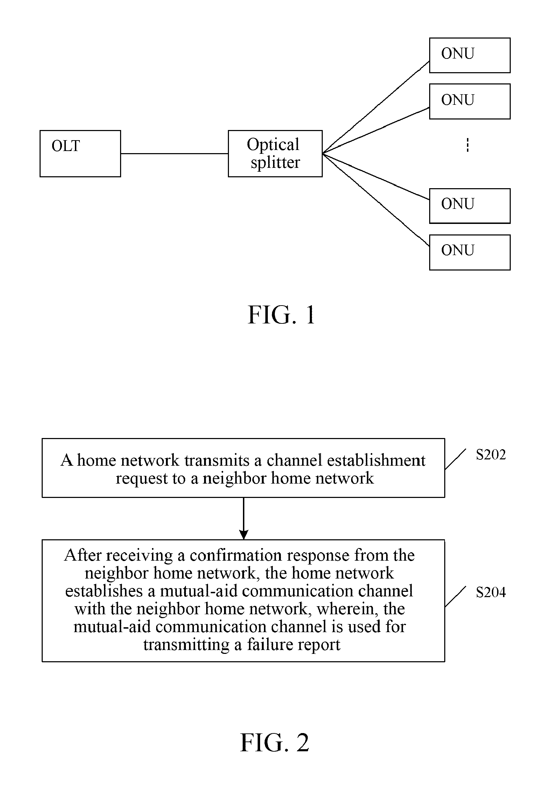

In the broadband optical access technology, a passive optical network is comprised of an Optical Line Terminal (OLT), an optical splitter, and an Optical Network Unit (ONU). Fig. 1 is a structural diagram of constitution of a passive optical network in the related art. As shown in Fig. 1, in the passive optical network, the OLT is connected to the optical splitter through a main fiber, and the optical splitter is connected to various ONUs through branch fibers. Due to reasons such as aging or an external force, it may result in breakpoints in the fibers, and further result in failure in normal communication between the OLT and the ONUs.

In order to repair the breakpoints, it needs to accurately locate the breakpoints of the fiber. If the breakpoints are located on the main fiber, the OLT side may accurately locate the breakpoints of the fiber using an Optical Time Domain Reflectometer (OTDR for short) technology. However, if the breakpoints occur on the branch fibers, due to influences of factors such as the optical splitter, it is very difficult and inaccurate to locate the breakpoints on the branch fibers using the OTDR technology at the OLT side. At present, although the breakpoints can be accurately located using the OTDR technology for locating breakpoints on the branch fibers at the ONU side, since the branch fibers have been broken, the ONU side cannot report the OTDR result to the OLT, which brings a large difficulty to the repair of the fibers.

In a passive optical network, when the ONU is powered off or the branch fiber is broken, a Lost of Signal (LOS) warning may be detected at the OLT side. However, as there is a significant difference between power-off of the ONU and break-off of the branch fiber, since if the branch fiber is broken, it needs to start locating and repairing the breakpoints. In order to distinguish them, when the ONU is powered off, it needs to report a Dying Gasp (with a function of transmitting a warning to notify the OLT before the ONU is powered off) to the OLT. In this way, when the OLT side receives the Dying Gasp, a failure condition that the fiber is broken may be excluded. However, after the ONU is powered off, the Dying Gasp is reported merely using remaining electrical quantity in the device. Whether the reporting of the Dying Gasp is successful is related to the remaining electrical quantity. If the remaining electrical quantity is small, the Dying Gasp cannot be reported successfully.

Thus, both reporting of the OTDR result and reporting of the Dying Gasp have difficulty in communication with the OLT. Therefore, it results in a low success in reporting, thereby causing the repair efficiency of the fiber to be low. This easily results in the home network being helpless, and influencing the normal operation of the passive optical network. In addition, when the branch fiber of the ONU is broken, a user of the ONU cannot surf the Internet during repair of the fiber. This will bring inconvenience to the user when the broadband business is more and more popular today.

For the problem in the related art that the repair efficiency of the fiber is low when the passive optical network is abnormal, there is no effective solution proposed at present.

### Summary of the Invention

As to the problem in the related art that the success in reporting of the failure is low when the passive optical network is abnormal, the embodiment of the present invention provides a method and apparatus for establishing a channel, in order to solve the above problem.

The embodiments of the present invention provide a method for establishing a channel, comprising: a home network transmitting a channel establishment request to a neighbor home network; and after receiving a confirmation response from the neighbor home network, the home network establishing a mutual-aid communication channel with the neighbor home network.

Preferably, a home network transmitting a channel establishment request to a neighbor home network may comprise: monitoring a state of an upstream communication channel of the home network; and when it is monitored that the state of the upstream communication channel is abnormal, the home network transmitting the channel establishment request to the neighbor home network.

Preferably, after the home network establishes a mutual-aid communication channel with the neighbor home network, the method may further comprise: monitoring a state of an upstream communication channel of the home network; and when it is monitored that the state of the upstream communication channel is abnormal, the home network transmitting a failure report to an optical line terminal through the mutual-aid communication channel; wherein, the failure report is used to notify the optical line terminal of a condition that the state of the upstream communication channel is abnormal.

Preferably, after the home network establishes a mutual-aid communication channel with the neighbor home network, the method may further comprise: the home network implementing a temporary network access operation through the mutual-aid communication channel.

Preferably, a home network transmitting a channel establishment request to a neighbor home network and the home network establishing a mutual-aid communication channel with the neighbor home network may comprise: a terminal device or a home gateway of the home network transmitting a request for establishing a mutual-aid communication channel to an upstream device of the neighbor home network; and after receiving a response from the upstream device, the terminal device or the home gateway establishing the mutual-aid communication channel with the upstream device.

Preferably, the terminal device or the home gateway transmitting a request for establishing a mutual-aid communication channel to the upstream device may comprise: the terminal device or the home gateway transmitting first request information to a first device in the home network, wherein, the first request information is used to request the neighbor home network to establish the mutual-aid communication channel with the home network; the first device transmitting second request information to a second device in the neighbor home network, wherein, the second request information is used to request the neighbor home network to establish the mutual-aid communication channel with the home network; and after receiving the second request information, the second device transmitting third request information to the upstream device, wherein, the third request information is used to request the neighbor home network to establish the mutual-aid communication channel with the home network.

Preferably, the home network transmitting a failure report to an optical line terminal through the mutual-aid communication channel may comprise: the home network transmitting a transmission request to the optical line terminal; and after receiving a request response fed back by the optical line terminal, the home network transmitting the failure report to the optical line terminal through the mutual-aid communication channel.

Preferably, before the terminal device or the home gateway transmits a request for establishing a mutual-aid communication channel to the upstream device, the method may further comprise: the home network reserving a bandwidth between the terminal device and the first device, and reserving a bandwidth between the first device and the second device, wherein, the bandwidths are used for information interchange.

The embodiments of the present invention further provide an apparatus for establishing a channel applied in a home network, comprising: a channel request module, configured to transmit a channel establishment request to a neighbor home network; and a channel establishment module, configured to establish a mutual-aid communication channel with the neighbor home network after receiving a confirmation response from the neighbor home network.

Preferably, the channel request module may comprise: a channel request unit, configured to monitor a state of an upstream communication channel of the home network; and trigger the home network to transmit the channel establishment request to the neighbor home network when it is monitored that the state of the upstream communication channel is abnormal.

Preferably, the apparatus may further comprise: a monitoring module, configured to monitor a state of an upstream communication channel of the home network; and trigger a failure reporting module when it is monitored that the state of the upstream communication channel is abnormal; and the failure reporting module, configured to transmit a failure report to an optical line terminal through the mutual-aid communication channel; wherein, the failure report is used to notify the optical line terminal of a condition that the state of the upstream communication channel is abnormal.

Preferably, the apparatus may further comprise: a network access module, configured to implement a temporary network access operation through the established mutual-aid communication channel.

In the embodiments of the present invention, the home network transmits the channel establishment request to the neighbor home network, and after receiving the conformation response from the neighbor home network, the home network establishes the mutual-aid communication channel with the neighbor home network. Thus, when the state of the upstream communication channel of the home network is abnormal, the home network transmits a failure report through the mutual-aid communication channel, or the home network implements a temporary network access operation through the mutual-aid communication channel. The embodiments of the present invention solve the problem in the related art that when the passive optical network is abnormal, the repair efficiency of the fiber is low, so that once the upstream communication channel is lost, the home network can still establish an emergent upstream communication channel with the neighbor home network, and contacts with the outside in a limited manner, to avoid that the home network is helpless, thereby ensuring that the passive optical network is in a normal operation.

### Brief Description of Drawings

Fig. 1 is a structural diagram of constitution of a passive optical network in the related art;
Fig. 2 is a flowchart of a method for transmitting a failure report according to an embodiment of the present invention;
Fig. 3 is a diagram of a flow of establishing a mutual-aid communication channel according to an embodiment of the present invention;
Fig. 4 is a diagram of constitution of an OYDR device outside an ONU of a passive optical network according to an embodiment of the present invention; and
Fig. 5 is a structural block diagram of an apparatus for transmitting a failure report according to an embodiment of the present invention.

### Preferred Embodiments of the Present Invention

In order to solve the problem in the related art that the success in reporting of the failure is low when the passive optical network is abnormal, the embodiment of the present invention provides a method and apparatus for transmitting a failure report. The embodiments of the present invention will be described in detail below in conjunction with accompanying drawings. It should be illustrated that without a conflict, the embodiments in the present application and the features in the embodiments can be combined with each other randomly.

The present embodiment provides a method for establishing a channel, which may be implemented at the ONU side. Fig. 2 is a flowchart of a method for establishing a channel according to an embodiment of the present invention. As shown in Fig. 2, the method includes the following steps (steps S202-S204):
in step S202, a home network transmits a channel establishment request to a neighbor home network; and
in step S204, after receiving a confirmation response from the neighbor home network, the home network establishes a mutual-aid communication channel with the neighbor home network, wherein, the mutual-aid communication channel is used for transmitting a failure report.

With the above method, the home network transmits the channel establishment request to the neighbor home network, and after receiving the conformation response from the neighbor home network, the home network establishes the mutual-aid communication channel with the neighbor home network. Thus, when the state of the upstream communication channel of the home network is abnormal, the home network transmits a failure report through the mutual-aid communication channel, or the home network implements a temporary network access operation through the mutual-aid communication channel. This solves the problem in the related art that when the passive optical network is abnormal, the repair efficiency of the fiber is low, so that once the upstream communication channel is lost, the home network can still establish an emergent upstream communication channel with the neighbor home network, and contacts with the outside in a limited manner, to avoid that the home network is helpless, thereby ensuring that the passive optical network is in a normal operation.

In the present embodiment, a mutual-aid communication channel which can transmit a failure report is established between the home network and the neighbor home network. A triggering condition of the channel establishment process may be that it is monitored that the state of the upstream communication channel of the home network is abnormal. Preferably, this may be achieved by the following preferable implementation. A home network transmitting a channel establishment request to a neighbor home network comprises: monitoring a state of an upstream communication channel of the home network; and when it is monitored that the state of the upstream communication channel is abnormal, the home network transmitting the channel establishment request to the neighbor home network. With the above preferable implementation, when the upstream communication channel of the home network is abnormal, the above mutual-aid communication channel may be triggered to be established, thereby reporting a failure through the mutual-aid communication channel. This improves the success rate in reporting of the failure, so that the system operates in a more stable manner.

In addition, the above process of establishing the mutual-aid communication channel is not limited to be performed under the trigger of the above triggering condition. The mutual-aid communication channel may be firstly established, and when the state of the upstream communication channel of the home network is abnormal, the home network may quickly report a failure through the established mutual-aid communication channel. Preferably, after the home network establishes the mutual-aid communication channel with the neighbor home network, the method further comprises: monitoring a state of an upstream communication channel of the home network; and when it is monitored that the state of the upstream communication channel is abnormal, the home network transmitting a failure report to an optical line terminal through the mutual-aid communication channel; wherein, the failure report is used to notify the optical line terminal of a condition that the state of the upstream communication channel is abnormal.

In addition, after the home network establishes the mutual-aid communication channel with the neighbor home network, the home network may implement a temporary network access operation through the mutual-aid communication channel, so that the user of the ONU can recover to surf the Internet as soon as possible, thereby improving user experience. Of course, the mutual-aid communication channel may be established in advance, and if necessary, the user surfs the Internet temporarily through the mutual-aid communication channel. Alternatively, the mutual-aid communication channel may be triggered to be established when it is monitored that the user cannot surf the Internet, thereby facilitating the user to recover a network access operation.

In the present embodiment, the ONU can report the OTDR result or report the Dying Gasp through a reliable path (for example, through the ONU in the neighbor network), thereby largely increasing the success in the reporting. The process of the home network establishing the mutual-aid communication channel with the neighbor home network may be performed by the following preferable implementation. A home network transmitting a channel establishment request to a neighbor home network and the home network establishing a mutual-aid communication channel with the neighbor home network comprises: a terminal device or a home gateway of the home network transmitting a request for establishing a mutual-aid communication channel to an upstream device of the neighbor home network; and after receiving a response from the upstream device, the terminal device or the home gateway establishing the mutual-aid communication channel with the upstream device. With the above preferable implementation, the home network establishes the mutual-aid communication channel with the neighbor home network, so that the home network can report a failure through the mutual-aid communication network.

Transmission of a request for establishing a mutual-aid communication channel from a terminal device or a home gateway to the upstream device in the present embodiment may be performed in the following preferable implementation. The terminal device or the home gateway transmitting a request for establishing a mutual-aid communication channel to the upstream device comprises: the terminal device or the home gateway transmitting first request information to a first device in the home network, wherein, the first request information is used to request the neighbor home network to establish the mutual-aid communication channel with the home network; the first device transmitting second request information to a second device in the neighbor home network, wherein, the second request information is used to request the neighbor home network to establish the mutual-aid communication channel with the home network; and after receiving the second request information, the second device transmitting third request information to the upstream device, wherein, the third request information is used to request the neighbor home network to establish the mutual-aid communication channel with the home network.

With the above preferable implementation, the terminal device or the home network establishes the mutual-aid communication channel with the upstream device, i.e., achieving establishment of the mutual-aid communication channel between the home network and the neighbor home network.

After the home network establishes the mutual-aid communication channel with the neighbor home network, the home network transmitting a failure report to an optical line terminal through the mutual-aid communication channel may comprise: the home network transmitting a transmission request to the optical line terminal; and after receiving a request response fed back by the optical line terminal, the home network transmitting the failure report to the optical line terminal through the mutual-aid communication channel.

Preferably, before the terminal device or the home gateway transmits a request for establishing a mutual-aid communication channel to the upstream device, the method may further comprise: the home network reserving a bandwidth between the terminal device and a first device, and reserving a bandwidth between the first device and a second device, wherein, the bandwidths are used for information interchange.

The above implementations of the present embodiment will be described below by way of example. When a problem occurs in the upstream communication channel in the home network A, it needs to negotiate with other devices in the home network using a device of the home network of the upstream communication channel (terminal device A, which is also referred to as a source device A), and determine a device (an intermediate device A) to be responsible for contacting and negotiating with the neighbor home network B. In the neighbor home network B, a device (intermediate device B) is specified to be responsible for contacting and negotiating with the intermediate device A, and for negotiating in the neighbor home network B, so as to establish a mutual-aid communication channel with the home network A.

The implementations of the present invention will be described in detail below in conjunction with specific embodiments and accompanying drawings.

### Embodiment one

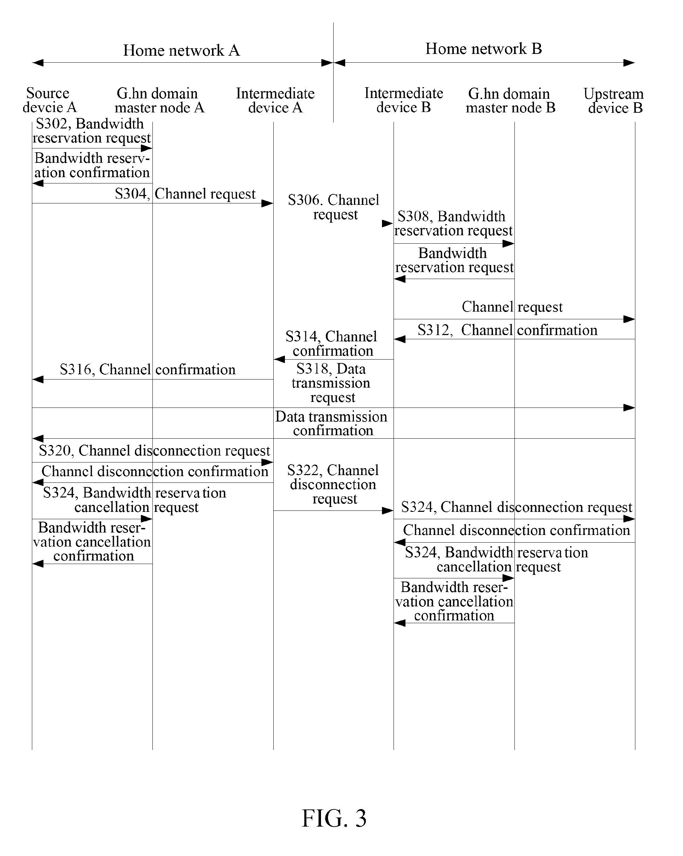

The present embodiment introduces a method for establishing a mutual-aid communication channel between a home network and a neighbor home network in a G.hn. Fig. 3 is a diagram of a flow of establishing a mutual-aid communication channel according to an embodiment of the present invention. As shown in Fig. 3, the flow comprises the following steps (step S302 to step S324).

In step S302, a source device A in a home network A interacts a bandwidth reservation request/bandwidth reservation confirmation (ND_reserve.req/ND_reserve.cnf) message with a G.hn domain master node (domain master A). The domain master A reserves a bandwidth between the source device A and an intermediate device A, and reserves a bandwidth between the intermediate device A and an intermediate device B at the same time.

In step S304, the source device A transmits a channel request (ND_channel.req) to the intermediate device A, to request the intermediate device A to establish a mutual-aid communication channel with the intermediate device B in the neighbor home network B.

In step S306, the intermediate device A transmits NDC_channel.req to the intermediate device B, to request the neighbor home network B to establish a mutual-aid communication channel with the home network A.

In step S308, the intermediate device B interacts the ND_reserve.req/ND_reserve.cnf message with the G.hn domain master B, to reserve a bandwidth between the intermediate device B and the upstream device B, and reserve a bandwidth between the intermediate device B and the intermediate device A at the same time.

In step S310, the intermediate device B transmits ND_channel.req to the upstream device B, to request it to establish a mutual-aid communication channel with the home network A.

In step S312, the upstream device B responds the intermediate device B with an ND_channel.cnf confirmation.

In step S314, the intermediate device B responds the intermediate device A with an NDC_channel.cnf confirmation.

In step S316, the intermediate device A responds the source device A with an ND_channel confirmation.

In step S318, the source device A transmits a data transmission request NDC_datatransfer.req to the upstream device B, and the upstream device B responds to the source device A with NDC_datatransfer.cnf to indicate that the data transmission is successful, and if necessary, the data transmission request may be transmitted many times.

In step S320, after the source device A completes data transmission, the source device A interacts a channel disconnection request/channel disconnection confirmation (ND_disconnect.req/ND-disconnect.cnf) with the intermediate device A, to cancel the mutual-aid communication channel, and interacts a bandwidth reservation cancellation request/bandwidth reservation cancellation confirmation ND_dis-reserve.req/ND_dis-reserve.cnf with the G.hn domain master A, to cancel bandwidth reservation.

In step S322, the intermediate device A interacts the NDC_disconnect.req/NDC-disconnect.cnf with the intermediate device B, to cancel the mutual-aid communication channel.

In step S324, the intermediate device B interacts the ND_disconnect.req/ND-disconnect.cnf with the upstream device B, to cancel the mutual-aid communication channel, and interacts the ND_dis-reserve.req/ND_dis-reserve.cnf with the G.hn domain master B, to cancel the bandwidth reservation.

In the present embodiment, the home network A may firstly establish a mutual-aid communication channel with the neighbor home network B, and if necessary, the home network A reports a failure through the mutual-aid communication channel. Alternatively, the home network A may establish the mutual-aid communication channel with the neighbor home network B when the state of the upstream communication channel of the home network A is abnormal.

### Embodiment two (OTDR reporting)

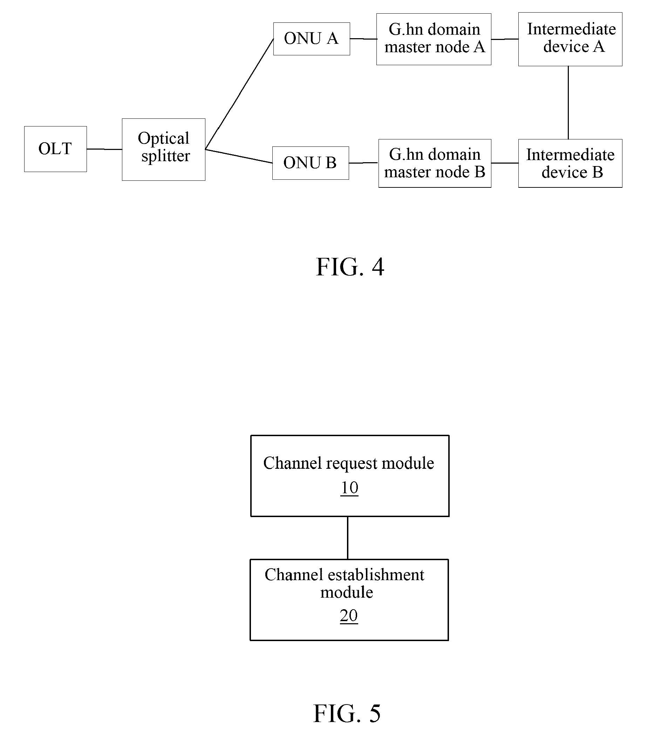

The present embodiment introduces a process of a source device A establishing a mutual-aid communication channel with an upstream device B in an OTDR reporting manner. Fig. 4 is a structural diagram of an OYDR device outside an ONU of a passive optical network according to an embodiment of the present invention. As shown in Fig. 4, when a failure such as breakage occurs in a branch fiber A, the OTDR device at the ONU A locates a failure of the fiber, an ONU A, as a source device A, initiates establishment of a mutual-aid channel, and a home gateway, as a G.hn domain master A, establishes a mutual-aid communication channel between the source device A and he upstream device B (ONU B) using the method in embodiment A, and the ONU A reports the OTDR detection result to the OLT through the upstream device (ONU B), wherein, the OTDR detection result carries related information of the ONU.

### Embodiment three (Dying Gasp reporting)

The present embodiment introduces a process of a source device A establishing a mutual-aid communication channel with an upstream device B in a Dying Gasp reporting manner. When the ONU A is powered off, if power-off information is notified to the home gateway (G.hn domain master A), the home gateway acts as the source device A and the G.hn domain master A at the same time, to request to establish the mutual-aid communication channel with the ONU B (upstream device B), and report the Dying Gasp of the ONU A to the OLT, wherein, the Dying Gasp carries related information of the ONU.

When the ONU A is powered off, the Dying Gasp message may also be broadcast in the home network, and the G.hn domain master A tries to establish a contact with the upstream device (ONU B) of the neighbor network, and transmits the Dying Gasp of the ONU to the OLT through the upstream device of the neighbor network, wherein, the Dying Gasp may carry related information of the ONU for use by the OLT to identify a source of the Dying Gasp.

In the present embodiment, the G.hn domain master plays a role in a source device at the same time, the ND_reserve.req/ND_reserve.cnf and ND_dis-reserve.req/ND_dis-reserve.cnf messages may not be interacted, and bandwidth reservation and release are performed by the G.hn domain master directly.

### Embodiment four

Embodiment one introduces a process of establishing a mutual-aid communication channel. After the establishment of the mutual-aid communication channel is completed, the home network may also implement a temporary network access operation through the mutual-aid communication channel. For example, when the source device A is an upstream device in the home network A and there is a failure in the upstream, the source device A establishes a mutual-aid communication channel with the upstream device B using the method in embodiment one, and other devices of the home network A implements a temporary network access operation through the mutual-aid communication channel between the source device A and the upstream device B.

Corresponding to the method for establishing a channel as described in the above embodiments, the present embodiment provides an apparatus for establishing a channel applied in a home network. The apparatus may be arranged at the ONU side, to achieve the above embodiments. Fig. 5 is a structural block diagram for establishing a channel according to an embodiment of the present invention. As shown in Fig. 5, the apparatus includes a channel request module 10 and a channel establishment module 20. The structure will be described in detail below.
the channel request module 10 is configured to transmit a channel establishment request to a neighbor home network; and
the channel establishment module 20 is connected to the channel request module 10, and is configured to establish a mutual-aid communication channel with the neighbor home network after receiving a confirmation response from the neighbor home network.

With the above apparatus, the channel request module 10 of the home network transmits the channel establishment request to the neighbor home network, and after receiving the conformation response from the neighbor home network, the channel establishment module 20 of the home network establishes the mutual-aid communication channel with the neighbor home network. Thus, when the state of the upstream communication channel of the home network is abnormal, the home network transmits a failure report through the mutual-aid communication channel, or the home network implements a temporary network access operation through the mutual-aid communication channel. This solves the problem in the related art that when the passive optical network is abnormal, the repair efficiency of the fiber is low, so that once the upstream communication channel is lost, the home network can still establish an emergent upstream communication channel with the neighbor home network, and contacts with the outside in a limited manner, to avoid that the home network is helpless, thereby ensuring that the passive optical network is in a normal operation.

In the present embodiment, a mutual-aid communication channel which can transmit a failure report is established between the channel establishment module 20 and the neighbor home network. A triggering condition of the channel establishment process may be that it is monitored that the state of the upstream communication channel of the home network is abnormal. Preferably, this may be achieved by the following preferable structure. The channel request module 10 comprises: a channel request unit, configured to monitor a state of an upstream communication channel of the home network; and when it is monitored that the state of the upstream communication channel is abnormal, trigger the home network to transmit the channel establishment request to the neighbor home network. With the above preferable structure, when the upstream communication channel of the home network is abnormal, the above mutual-aid communication channel may be triggered to be established, thereby reporting a failure through the mutual-aid communication channel. This improves the success rate in reporting of the failure, so that the system operates in a more stable manner.

In addition, the above process of establishing the mutual-aid communication channel is not limited to be performed under the trigger of the above triggering condition. The mutual-aid communication channel may be firstly established, and when the state of the upstream communication channel of the home network is abnormal, the home network may quickly report a failure through the established mutual-aid communication channel. Specifically, the above apparatus may further comprise: a monitoring module, configured to monitor a state of an upstream communication channel of the home network; and trigger a failure reporting module when it is monitored that the state of the upstream communication channel is abnormal; and the failure reporting module, configured to transmit a failure report to an optical line terminal through the mutual-aid communication channel; wherein, the failure report is used to notify the optical line terminal of a condition that the state of the upstream communication channel is abnormal.

Preferably, the above apparatus may further comprise a network access module, configured to implement a temporary network access operation through the established mutual-aid communication channel, so that the user of the ONU can recover to surf the Internet as soon as possible, thereby improving user experience. Of course, the mutual-aid communication channel may be established in advance, and if necessary, the user surfs the Internet temporarily through the mutual-aid communication channel. Alternatively, the mutual-aid communication channel may be triggered to be established when it is monitored that the user cannot surf the Internet, thereby facilitating the user to recover a network access operation.

In the present embodiment, the ONU can report the OTDR result or report the Dying Gasp through a reliable path (for example, through the ONU in the neighbor network), thereby largely increasing the success in the reporting. The process of the home network establishing the mutual-aid communication channel with the neighbor home network may be performed by the following preferable structure:
a request transmission unit, configured to transmit a request for establishing a mutual-aid communication channel to an upstream device of the neighbor home network; and a channel establishment unit, configured to establish the mutual-aid communication channel with the upstream device through the terminal device or the home gateway after receiving a response from the upstream device. With the above preferable structure, the home network establishes the mutual-aid communication channel with the neighbor home network, so that the home network can report a failure through the mutual-aid communication network.

After the home network establishes the mutual-aid communication channel with the neighbor home network, transmission of the failure report from the home network to the optical line terminal through the mutual-aid communication channel may be performed in the following preferable structure: a transmission request unit, configured to transmit a transmission request to the optical line terminal; and a report transmission unit, configured to transmit the failure report to the optical line terminal through the mutual-aid communication channel after receiving a request response fed back by the optical line terminal.

Preferably, the above apparatus further comprises: a bandwidth reservation module, configured to reserve a bandwidth between the terminal device in the home network and a first device, and reserve a bandwidth between the first device and a second device in the neighbor home network, wherein, the bandwidths are used for information interchange.

It can be seen from the above description that with the scheme of the embodiments of the present invention, once the upstream channel is lost, the home network can still establish an emergent upstream communication channel with the neighbor home network, and contacts with the outside in a limited manner, to avoid that the home network is helpless.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, each module/unit in the above embodiments can be implemented in a form of hardware, or can also be implemented in a form of software functional module. The present invention is not limited to any particular form of a combination of hardware and software.

Although preferable embodiments of the present invention have been disclosed for the purpose of illustration, those skilled in the art will recognize that various improvements, add and substitutions are possible. Therefore, the scope of the present invention should not be limited to the above embodiments.

### Industrial Applicability

The embodiments of the present invention solve the problem that when the passive optical network is abnormal, the repair efficiency of the fiber is low, so that once the upstream communication channel is lost, the home network can still establish an emergent upstream communication channel with the neighbor home network, and contacts with the outside in a limited manner, to avoid that the home network is helpless, thereby ensuring that the passive optical network is in a normal operation.

## Claims

1. A method for establishing a channel, comprising:
a home network transmitting a channel establishment request to a neighbor home network; and
after receiving a confirmation response from the neighbor home network, the home network establishing a mutual-aid communication channel with the neighbor home network.

2. The method according to claim 1, wherein, the home network transmitting the channel establishment request to the neighbor home network comprises:
monitoring a state of an upstream communication channel of the home network; and
when it is monitored that the state of the upstream communication channel is abnormal, the home network transmitting the channel establishment request to the neighbor home network.

3. The method according to claim 1, wherein, after the home network establishes the mutual-aid communication channel with the neighbor home network, the method further comprises:
monitoring a state of an upstream communication channel of the home network; and
when it is monitored that the state of the upstream communication channel is abnormal, the home network transmitting a failure report to an optical line terminal through the mutual-aid communication channel; wherein, the failure report is used to notify the optical line terminal of a condition that the state of the upstream communication channel is abnormal.

4. The method according to claim 1, wherein, after the home network establishes the mutual-aid communication channel with the neighbor home network, the method further comprises:
the home network implementing a temporary network access operation through the mutual-aid communication channel.

5. The method according to claim 1, wherein, the home network transmitting the channel establishment request to the neighbor home network and the home network establishing the mutual-aid communication channel with the neighbor home network comprises:
a terminal device or a home gateway of the home network transmitting a request for establishing a mutual-aid communication channel to an upstream device of the neighbor home network; and
after the terminal device or the home gateway receives a response from the upstream device, the terminal device or the home gateway establishing the mutual-aid communication channel with the upstream device.

6. The method according to claim 5, wherein, the terminal device or the home gateway transmitting the request for establishing the mutual-aid communication channel to the upstream device comprises:
the terminal device or the home gateway transmitting first request information to a first device in the home network, wherein, the first request information is used to request the neighbor home network to establish the mutual-aid communication channel with the home network;
the first device transmitting second request information to a second device in the neighbor home network, wherein, the second request information is used to request the neighbor home network to establish the mutual-aid communication channel with the home network; and
after receiving the second request information, the second device transmitting third request information to the upstream device, wherein, the third request information is used to request the neighbor home network to establish the mutual-aid communication channel with the home network.

7. The method according to claim 3, wherein, the home network transmitting the failure report to the optical line terminal through the mutual-aid communication channel comprises:
the home network transmitting a transmission request to the optical line terminal; and
after receiving a request response fed back by the optical line terminal, the home network transmitting the failure report to the optical line terminal through the mutual-aid communication channel.

8. The method according to claim 5, wherein, before the terminal device or the home gateway transmits the request for establishing the mutual-aid communication channel to the upstream device, the method further comprises:
the home network reserving a bandwidth between the terminal device and the first device, and reserving a bandwidth between the first device and the second device, wherein, the bandwidths are used for information interchange.

9. An apparatus for establishing a channel, applied in a home network, comprising:
a channel request module, configured to transmit a channel establishment request to a neighbor home network; and
a channel establishment module, configured to establish a mutual-aid communication channel with the neighbor home network after receiving a confirmation response from the neighbor home network.

10. The apparatus according to claim 9, wherein, the channel request module comprises:
a channel request unit, configured to monitor a state of an upstream communication channel of the home network; and trigger the home network to transmit the channel establishment request to the neighbor home network when it is monitored that the state of the upstream communication channel is abnormal.

11. The apparatus according to claim 9, further comprising:
a monitoring module, configured to monitor a state of an upstream communication channel of the home network; and trigger a failure reporting module when it is monitored that the state of the upstream communication channel is abnormal; and
the failure reporting module, configured to transmit a failure report to an optical line terminal through the mutual-aid communication channel; wherein, the failure report is used to notify the optical line terminal of a condition that the state of the upstream communication channel is abnormal.

12. The apparatus according to claim 9, further comprising:
a network access module, configured to implement a temporary network access operation through the established mutual-aid communication channel.
